# EUROPEAN PATENT SPECIFICATION

(11) **EP 3 124 669 B1**
(45) Date of publication and mention of the grant of the patent: **19.08.2020**
(21) Application number: 15768094.3
(22) Date of filing: 19.03.2015
(51) Int. Cl.: D06F 37/10, D06F 37/02, D06F 39/14, E05D 3/12, E05D 7/00

(54) **DRUM WASHING MACHINE**
TROMMELWASCHMASCHINE
MACHINE À LAVER À TAMBOUR

(30) Priority: 28.03.2014 KR 20140036447
(43) Date of publication of application: 01.02.2017
(73) Proprietor: Samsung Electronics Co., Ltd., Suwon-si, Gyeonggi-do 443-742 (KR)
(72) Inventor: CHOI, Han Kyu, Suwon-si Gyeonggi-do 443-270 (KR)
(74) Representative: Gulde & Partner
(86) International application number: PCT/KR2015/002674
(87) International publication number: WO 2015/147481

(56) References cited:
- EP-A2- 1 098 027
- JP-A- 2005 143 794
- JP-A- 2009 112 867
- KR-A- 20110 057 920
- KR-A- 20120 097 307
- KR-Y1- 200 202 030
- US-A1- 2003 172 692
- US-A1- 2013 234 573

## Description

### Technical Field

The present invention relates to a drum washing machine, and more particularly, to a drum washing machine having an improved coupling structure of a door and a cabinet. In particular, the invention relates to a drum washing machine according to the preamble of claim 1.

### Background Art

In general, a washing machine is equipment of washing laundry by rotating a cylindrical rotating tub in which laundry and washing water are contained. Kinds of washing machines include a drum washing machine and a vertical axis type washing machine. In the drum washing machine, a rotating tub is positioned horizontally, and the rotating tub rotates in a forward direction with respect to the horizontal axis to raise laundry upward along the inner circumference surface and drop the laundry downward to thereby wash the laundry. In the vertical axis type washing machine, a rotating tub with pulsators therein is positioned vertically, and the rotating tub rotates in a forward direction with respect to the vertical axis so as for the pulsators to generate a stream of water, thereby washing laundry using the stream of water.

The drum washing machine includes a cabinet forming the outer appearance, a cylindrical tub which is installed in the inside of the cabinet and in which washing water is contained, a drum rotatably installed in the inside of the tub to wash laundry, a driving motor disposed behind the tub and configured to rotate the drum, and a door disposed in the front portion of the cabinet. In at least one part of the cabinet, an inlet communicating with the drum is provided, and the door opens and closes the inlet.

Typically, a structure of rotating the door to open the inlet is used. However, in this case, if the size of the door is large, the door could not open completely.

Also, the door is fixed on the frame of the cabinet by a hinge assembly, and due to the weight of the door and the friction generated when the door opens and closes, abrasion and deformation occur.

Drum washing machines are disclosed for example in JP 2009 112867 A, US 2003/172692 A1 and JP 2005 143794 A.

### Disclosure

### Technical Problem

An aspect of the present invention is to provide a drum washing machine having an improved coupling structure of a door and a cabinet.

Another aspect of the present invention is to provide a drum washing machine including a reinforcement member for reinforcing the strength of a hinge assembly.

Still another aspect of the present invention is to provide a drum washing machine capable of improving workability when a hinge assembly is installed.

### Technical Solution

In accordance with the invention, the reinforcement member further comprises a fixing part formed at the other end of the body, and configured to fix the reinforcement member at the cabinet, wherein the body further comprises a support rib formed on an outer circumference surface of the body, and configured to contact and support the cabinet. According to a further embodiment, the reinforcement member is rotatably coupled with the hinge shaft, and supported and fixed on the rear surface of the cabinet.

According to a further embodiment, the fixing part comprises a screw, a rivet, welding, coking, and thermosetting.

According to a further embodiment, a pair of reinforcement members are disposed at upper and lower portions of the hinge shaft.

According to a further embodiment, the hinge assembly comprises: a first bracket coupled with the cabinet; a second bracket coupled with the door; and a connection unit rotatably connecting the first bracket with the second bracket, wherein the first bracket is coupled with the hinge shaft.

According to a further embodiment, one end of the connection unit is connected to the hinge shaft of the first bracket, and the other end of the connection unit is connected to the second bracket.

Also, the second bracket comprises a rotation shaft for rotating the door, and the connection unit is connected to the rotation shaft.

In accordance with another aspect of the present disclosure, a drum washing machine including a door rotatably coupled by a hinge assembly to open and close an opening formed in at least one part of a cabinet, wherein the hinge assembly comprises: a first bracket coupled with the cabinet; a second bracket coupled with the door; a connection unit having one end coupled with the first bracket by a hinge shaft, and the other end rotatably connected to the second bracket; and a reinforcement member having one end rotatably connected to the hinge shaft, and the other end fixed on the cabinet.

Also, the reinforcement member comprises: a body; a hinge shaft coupling hole formed at one end of the body, and configured to pass the hinge shaft therethrough; and a fixing part formed at the other end of the body, and configured to fix the reinforcement member at the cabinet.

Also, the fixing part of the reinforcement member comprises a screw, a rivet, welding, coking, and thermosetting.

Also, the body further comprises a support rib formed on an outer circumference surface of the body, and configured to contact and support the cabinet.

### Advantageous Effects

According to an embodiment of the present invention, by improving a coupling structure of the cabinet and the door, the door can be prevented from drooping and being deformed, resulting in an improvement of product quality.

Also, since the strength of the hinge assembly fixed on the cabinet can be reinforced by the reinforcement member, and the reinforcement member can rotate with respect to the hinge shaft to be installed on the cabinet, installability and workability can be improved.

### BRIEF DESCRIPTION OF THE DRAWINGS

FIG. 1 is a perspective view of a drum washing machine having a door according to an embodiment of the present invention.
FIG. 2 is a perspective view schematically showing a hinge assembly according to an embodiment of the present invention.
FIG. 3 is an exploded perspective view showing a reinforcement member and a hinge assembly according to an embodiment of the present invention.
FIG. 4 is a perspective view showing coupling of a cabinet and a hinge assembly according to an embodiment of the present invention.
FIG. 5 is a perspective view showing coupling of a cabinet and a reinforcement member of a hinge assembly according to an embodiment of the present invention.

### Best Mode

Hereinafter, embodiments of the present invention will be described in detail with reference to the accompanying drawings.

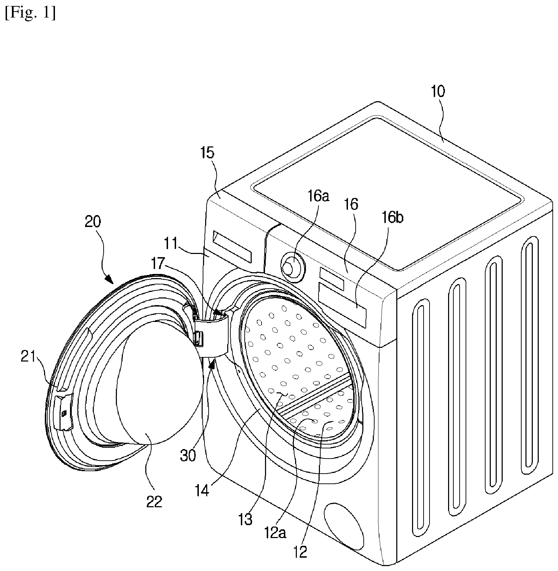

FIG. 1 is a perspective view of a drum washing machine having a door according to an embodiment of the present invention;
As shown in FIG. 1, a drum washing machine 1 may include a cabinet 10 forming the outer appearance, a tub (not shown) installed in the inside of the cabinet 10 and configured to store washing water, and a cylindrical drum 12 rotatably installed in the inside of the tub, wherein a plurality of dehydrating holes are formed in the wall of the cylindrical drum 12.

In a front panel 11 disposed in the front portion of the cabinet 10, an opening 13 may be formed to enable a user to put or take laundry into or out of the inside of the tub (not shown) and the drum 12. The opening 13 may be opened or closed by a door 20 installed on the front panel 11 of the cabinet 10.

In the front panel 11 of the cabinet 10, a door contact member 14 contacting the door 20 when the door 20 closes the opening 13 may be provided. The door contact member 14 may be recessed in the inside direction of the drum washing machine 1, and formed along the border of the opening 13.

Also, the door contact member 14 may be formed to correspond to the shape of the door 20. Accordingly, a part protruding with respect to the surface of the cabinet 10 when the door 20 closes can be minimized, which leads to improvement of the beauty of the drum washing machine 1.

Also, at a part of the door contact member 14, a hinge assembly installing part 17 for installing the hinge assembly 30 which will be described later may be provided.

Meanwhile, although not shown in FIG. 1, a water supply pipe for supplying washing water to the inside of the tub may be installed in the top of the tub, wherein one end of the water supply pipe may connect to a water supply valve, and the other end of the water supply pipe may connect to a detergent case 15.

The detergent case 15 may connect to the drum 12 through a connection pipe, and water supplied through the water supply pipe may pass through the detergent case 15 and be supplied to the inside of the drum 12 together with detergent.

In the front portion of the drum 12, an opening may be formed to put or take laundry into or out of the inside of the drum 12, and in the rear portion of the drum 12, a motor (not shown) for driving the drum 12 may be provided.

In the lower portion of the cabinet 10, a drain unit (not shown) may be provided to discharge washing water filled in the inside of the tub to the outside of the drum washing machine 1. The drain unit may include a drain pump (not shown), a connection hose (not shown) connecting the tub to the drain pump to introduce water filled in the inside of the tub to the drain pump, and a drain hose (not shown) to guide water pumped by the drain pump to the outside of the drum washing machine 1.

In the upper portion of the front panel 11 of the cabinet 10, a control panel 16 may be provided. The control panel 16 may include a display window 16b to display the state of the drum washing machine 1, and an operating unit 16a to enable a user to control operations of the drum washing machine 1.

The door 20 may include a door frame 21 forming the outer appearance of the drum washing machine 1, and a door glass 22 coupled with the rear portion of the door frame 21 and inserted into the inside of the opening 13 of the cabinet 10.

The door glass 22 may be configured to show the inside of the drum 12 in order for the user to be able to check laundry process with his/her naked eyes. The door glass 22 may preferably protrude in the rear direction of the cabinet 10.

The door frame 21 may include a hinge assembly 30 to couple the door 20 with the cabinet 10.

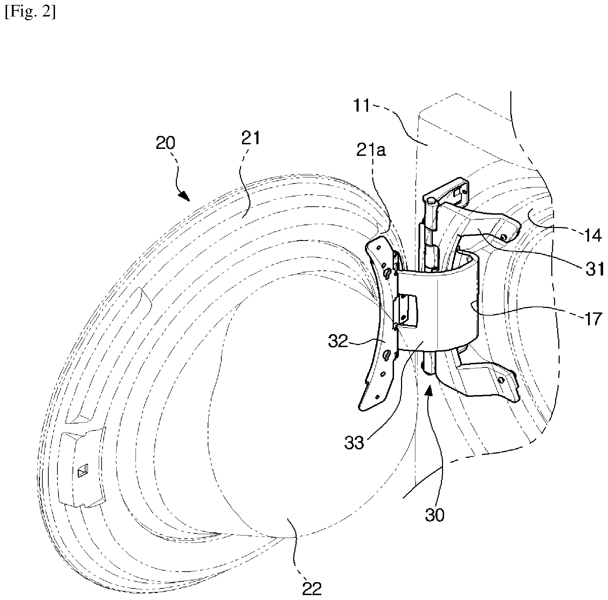

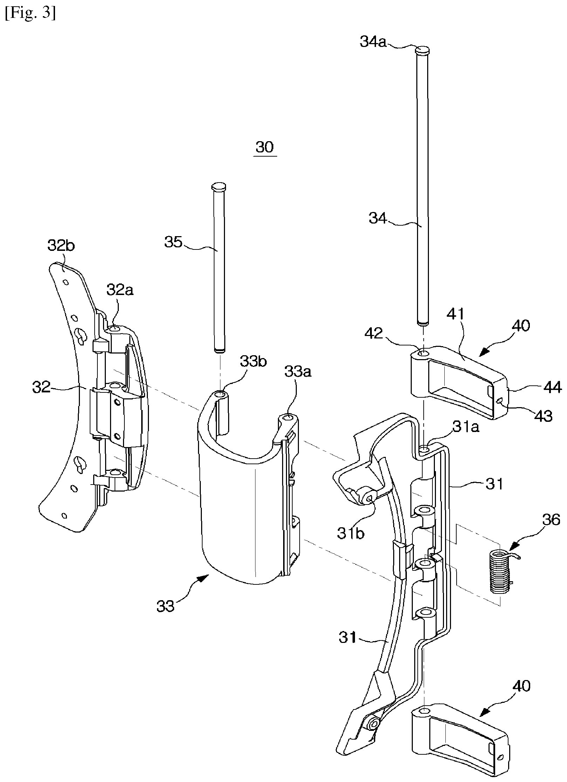

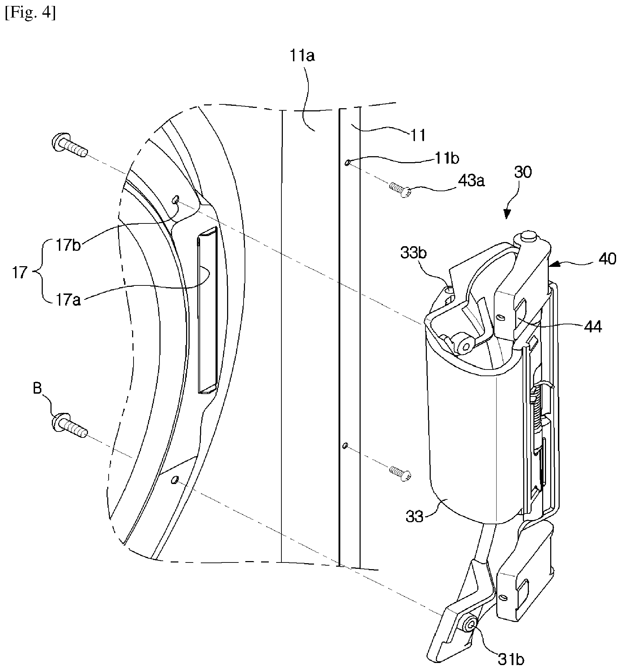

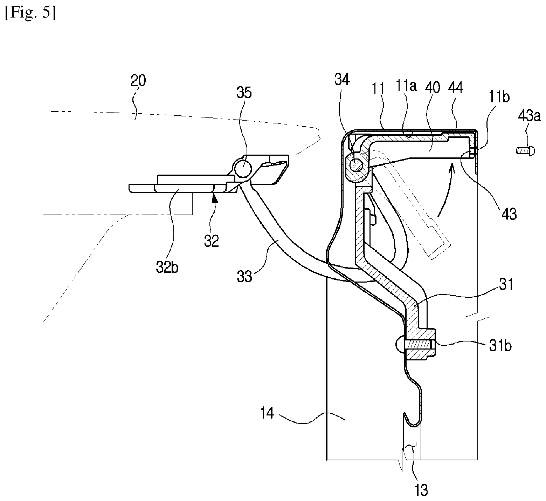

FIG. 2 is a perspective view schematically showing a hinge assembly according to an embodiment of the present invention, FIG. 3 is an exploded perspective view showing a reinforcement member and a hinge assembly according to an embodiment of the present invention, FIG. 4 is a perspective view showing coupling of a cabinet and a hinge assembly according to an embodiment of the present invention, and FIG. 5 is a perspective view showing coupling of a cabinet and a reinforcement member of a hinge assembly according to an embodiment of the present invention.

As shown in FIGS. 2 to 5, a hinge assembly 30 for connecting the door 20 rotatably with respect to the cabinet 10 may include a first bracket 31 coupled with the cabinet 10, a second bracket 32 coupled with the door 20, and a connection unit 33 connecting the first bracket 31 with the second bracket 32 and configured to rotate the door 20 in the front direction with respect to the cabinet 10.

The first bracket 31 may be coupled with the cabinet 10 through the hinge assembly installing part 17 formed in the front panel 11 of the cabinet 10.

The hinge assembly installing part 17 may be disposed in an area of the door contact member 14, and include a first installing part 17a through which the connection unit 33 passes, and a second installing part 17b which the first bracket 31 is coupled with and fixed at.

The first installing part 17a may preferably correspond to or be larger than the size of the connection unit 33 so that the connection unit 33 can pass through the first installing part 17a and rotate.

The second installing part 17b may be configured to couple the first bracket 31 with the front panel 11. There may be formed two second installing parts 17b above and below the first installing part 17a. A bolt B may be inserted into the second installing part 17b and fixed.

In the first bracket 31, an assembly hole 31b may be formed to assemble the bolt B to be fixed at the second installing part 17b.

In the first bracket 31, a hinge shaft hole 31a may be formed with which a hinge shaft 34 is coupled.

The hinge shaft 34 passing through the hinge shaft hole 31a of the first bracket 31 may include the connection unit 33 and an elastic member 36 connected to the center portion.

The elastic member 36 may support the hinge shaft 34 and the connection unit 33, and guide the movement of the connection unit 33.

In the second bracket 32, a door support part 32b installed on and supported by the door frame 21 of the door 20, and a rotation shaft hole 32a with which a rotation shaft 35 for rotatably supporting the door 20 is coupled may be formed.

In the door frame 21 of the door 20, a second bracket installing part 21a on which the second bracket 32 is installed may be formed.

Meanwhile, at both ends of the connection unit 33, a first coupling hole 33a coupled with the hinge shaft 34 of the first bracket 31, and a second coupling hole 33b coupled with the rotation shaft 35 of the second bracket 32 may be respectively formed.

One end of the connection unit 33 may be connected to the hinge shaft 34 of the first bracket 31 fixed on the rear surface 11a of the cabinet 10, and the other end of the connection unit 33 may be connected to the rotation shaft 35 of the second bracket 32 fixed on the door frame 21 of the door 20.

Accordingly, the door 20 may rotate with respect to the hinge shaft 34 rotatably fixed at one end of the connection unit 33, and may rotate by the rotation of the rotation shaft 35 coupled with the other end of the connection unit 33.

The door 20 may rotate in a front-back direction with respect to the opening 13 by the connection unit 33 moving horizontally with respect to the hinge shaft 34 of the hinge assembly 30, thus opening or closing the opening 13.

Meanwhile, in the hinge shaft 34 of the hinge assembly 30, a reinforcement member 40 for supporting the cabinet 10 and the hinge assembly 30 may be provided.

The reinforcement member 40 may have one end rotatably coupled with the hinge shaft 34 of the hinge assembly 30, and may be supported and fixed on the rear surface 11a of the cabinet 10.

The reinforcement member 40 may include a body 41, a hinge shaft coupling hole 42 which is formed at one end of the body 41 and into which the hinge shaft 34 is inserted, and a fixing part 43 formed at the other end of the body 41 to fix the reinforcement member 40 at the cabinet 10.

On the outer surface of the body 41, a support rib 44 may be formed to improve contact to the rear surface 11a of the cabinet 10. The support rib 44 may reinforce the strength of the reinforcement member 40.

The fixing part 43 of the reinforcement member 40 may be formed in one end of the body 41, and may be fixed by a fixing member 43a such as a bolt penetrating the fixing hole 11b formed in the front panel 11 of the cabinet 10.

In the current embodiment, the fixing part 43 of the reinforcement member 40 is fixed on the cabinet 10 by the fixing member 43a penetrating the fixing hole 11b, however, the concept of the present invention is not limited to this. For example, the reinforcement member 40 may be fixed by a screw, a rivet, welding, coking, thermosetting, etc.

A pair of reinforcement members 40 may be respectively installed at the upper and lower portions of the hinge shaft 34, and the hinge shaft 34 may include stoppers 34a protruding outward in order to prevent the reinforcement members 40 from being separated or deviating from the hinge shaft 34.

Now, a process of fixing the hinge assembly 30 on the cabinet 10 will be described with reference to FIGS. 4 and 5.

The first bracket 31 of the hinge assembly 30 may be fixed using the bolt B at the second installing part 17b of the hinge assembly installing part 17 formed in the rear surface 11a of the front panel 11.

One end of the connection unit 33 may pass through the first installing part 17a.

The reinforcement member 40 of the hinge shaft 34 may be disposed toward the first bracket 31.

If the first bracket 31 is fixed on the front panel 11, the reinforcement member 40 may rotate with respect to the rotation shaft 35 to contact the rear surface 11a of the front panel 11, and the reinforcement member 40 may be fixed on the front panel 11 through the fixing hole 11b of the front panel 11.

Since the hinge assembly 30 according to an embodiment of the present invention further includes a front panel fixing part through the fixing part 43 of the reinforcement member 40 in addition to a front panel fixing part through the assembly hole 31b of the first bracket 31, load applied to the hinge assembly 30 can be distributed, and accordingly, deformation can be prevented.

Meanwhile, if the first bracket 31 is fixed on the rear surface 11a of the front panel 11, the second coupling hole 33b of the connection unit 33 may be coupled with the second bracket 32 using the rotation shaft 35.

Fixing the reinforcement member 40 at the front panel 11 and fixing the second bracket 32 at the door 20 may be performed in this order or in the reverse order.

## Claims

1. A drum washing machine (1) comprising:
a cabinet (10) forming an outer appearance of the drum washing machine (1), and
having an opening (13) into which laundry is put;
a door (20) configured to open and close the opening (13) of the cabinet (10);
a hinge assembly (30) including a hinge shaft (34) to support the door (20) such that the door (20) is rotatable with respect to the cabinet (10); and
a reinforcement member (40) configured to support the cabinet (10) and the hinge assembly (30), and rotatably connected to the hinge shaft (34), wherein the reinforcement member (40) comprises a body (41), and a hinge shaft coupling hole (42) formed in one end of the body (41) and configured to pass the hinge shaft (34) therethrough,
**characterized in that**
the reinforcement member (40) further comprises a fixing part (43) formed at the other end of the body (41), and configured to fix the reinforcement member (40) at the cabinet (10), wherein the body (41) further comprises a support rib (44) formed on an outer circumference surface of the body (41), and configured to contact and support the cabinet (10).

2. The drum washing machine (1) according to claim 1, wherein the reinforcement member (40) is rotatably coupled with the hinge shaft (34), and supported and fixed on the rear surface (11a) of a front panel (11) of the cabinet (10).

3. The drum washing machine according to claim 1, wherein the fixing part (43) comprises one of a screw, a rivet, welding, coking, or thermosetting.

4. The drum washing machine (1) according to claim 1, wherein a pair of reinforcement members (40) are disposed at upper and lower portions of the hinge shaft (34).

5. The drum washing machine (1) according to claim 1, wherein the hinge assembly (30) comprises:
a first bracket (31) coupled with the cabinet (10);
a second bracket (32) coupled with the door (20); and
a connection unit (33) rotatably connecting the first bracket (31) with the second bracket (32),
wherein the first bracket (31) is coupled with the hinge shaft (34).

6. The drum washing machine (1) according to claim 5, wherein one end of the connection unit (33) is connected to the hinge shaft (34) of the first bracket (31), and the other end of the connection unit (33) is connected to the second bracket (32).

7. The drum washing machine (1) according to claim 6, wherein the second bracket (32) comprises a rotation shaft (35) for rotating the door (20), and
the connection unit (33) is connected to the rotation shaft (35).

## Patentansprüche

1. Trommelwaschmaschine (1), umfassend:
einen Schrank (10), der ein äußeres Aussehen der Trommelwaschmaschine (1) ausbildet und eine Öffnung (13) aufweist, in die Wäsche geladen wird;
eine Tür (20), die dazu ausgestaltet ist, die Öffnung (13) des Schranks (10) zu öffnen und zu schließen;
eine Scharnieranordnung (30), die eine Scharnierwelle (34) enthält, um die Tür (20) zu stützen, so dass die Tür (20) in Bezug auf den Schrank (10) drehbar ist; und
ein Verstärkungselement (40), das dazu ausgestaltet ist, den Schrank (10) und die Scharnieranordnung (30) zu stützen, und mit der Scharnierwelle (34) drehbar verbunden ist, wobei
das Verstärkungselement (40) einen Körper (41) umfasst und ein Scharnierwellenkopplungsloch (42) in einem Ende des Körpers (41) ausgebildet ist und dazu ausgestaltet ist, die Scharnierwelle (34) dadurch zu leiten,
**dadurch gekennzeichnet, dass**
das Verstärkungselement (40) ferner ein Befestigungsteil (43) umfasst, das an dem anderen Ende des Körpers (41) ausgebildet ist und dazu ausgestaltet ist, das Verstärkungselement (40) an dem Schrank (10) zu befestigen, wobei der Körper (41) ferner eine Stützrippe (44) umfasst, die an einer äußeren Umfangsfläche der Körpers (41) ausgebildet ist und dazu ausgestaltet ist, den Schrank (10) zu kontaktieren und zu stützen.

2. Trommelwaschmaschine (1) nach Anspruch 1, wobei das Verstärkungselement (40) drehbar mit der Scharnierwelle (34) verbunden ist und auf der hinteren Fläche (11a) einer Vorderwand (11) des Schranks (10) gestützt und befestigt ist.

3. Trommelwaschmaschine nach Anspruch 1, wobei das Befestigungsteil (43) eines aus einer Schraube, einem Niet, Schweißen, Kokerei oder Wärmehärten umfasst.

4. Trommelwaschmaschine (1) nach Anspruch 1, wobei ein Paar von Verstärkungselementen (40) an einem oberen und einem unteren Abschnitt der Scharnierwelle (34) angeordnet ist.

5. Trommelwaschmaschine (1) nach Anspruch 1, wobei die Scharnieranordnung (30) Folgendes umfasst:
eine erste Klammer (31), die an den Schrank (10) gekoppelt ist;
eine zweite Klammer (32), die an die Tür (20) gekoppelt ist; und
eine Verbindungseinheit (33), welche die erste Klammer (31) drehbar an die zweite Klammer (32) koppelt,
wobei die erste Klammer (31) an die Scharnierwelle (34) gekoppelt ist.

6. Trommelwaschmaschine (1) nach Anspruch 5, wobei ein Ende der Verbindungseinheit (33) mit der Scharnierwelle (34) der ersten Klammer (31) verbunden ist und das andere Ende der Verbindungseinheit (33) mit der zweiten Klammer (32) verbunden ist.

7. Trommelwaschmaschine (1) nach Anspruch 6, wobei die zweite Klammer (32) eine Drehwelle (35) zum Drehen der Tür (20) umfasst und die Verbindungseinheit (33) mit der Drehwelle (35) verbunden ist.

## Revendications

1. Machine à laver à tambour (1) comprenant :
une carrosserie (10) formant un aspect extérieur de la machine à laver à tambour (1), et ayant une ouverture (13) dans laquelle le linge est mis ;
une porte (20) conçue pour ouvrir et fermer l'ouverture (13) de la carrosserie (10) ;
un ensemble d'articulation (30) comprenant une tige d'articulation (34) pour supporter la porte (20) de telle sorte que la porte (20) peut être pivotée relativement à la carrosserie (10) ; et
un élément de renforcement (40) conçu pour supporter la carrosserie (10) et l'ensemble d'articulation (30), et relié de façon pivotante à la tige d'articulation (34),
l'élément de renforcement (40) comprenant un corps (41) et un orifice de couplage de tige d'articulation (42) formé à une extrémité du corps (41) et conçu pour y faire passer la tige d'articulation (34),
**caractérisé en ce que**
l'élément de renforcement (40) comprend en outre une partie de fixation (43) formée à l'autre extrémité du corps (41), et conçue pour fixer l'élément de renforcement (40) sur la carrosserie (10), le corps (41) comprenant en outre une nervure de support (44) formée sur une surface de circonférence extérieure du corps (41), et conçue pour être en contact avec la carrosserie et la supporter (10).

2. Machine à laver à tambour (1) selon la revendication 1, l'élément de renforcement (40) étant couplé de façon pivotante avec la tige d'articulation (34), et supporté et fixé sur la surface arrière (11a) d'un panneau frontal (11) de la carrosserie (10).

3. Machine à laver à tambour selon la revendication 1, la partie de fixation (43) comprenant un élément parmi une vis, un rivet, le soudage, la carbonisation ou le thermodurcissement.

4. Machine à laver à tambour (1) selon la revendication 1, une paire d'éléments de renforcement (40) étant disposée sur des parties supérieure et inférieure de la tige d'articulation (34).

5. Machine à laver à tambour (1) selon la revendication 1, l'ensemble d'articulation (30) comprenant :
un premier support (31) couplé avec la carrosserie (10) ;
un deuxième support (32) couplé avec la porte (20) ; et
une unité de liaison (33) reliant de façon pivotante le premier support (31) au deuxième support (32),
le premier support (31) étant couplé avec la tige d'articulation (34).

6. Machine à laver à tambour (1) selon la revendication 5, une extrémité de l'unité de liaison (33) étant reliée à la tige d'articulation (34) du premier support (31), et l'autre extrémité de l'unité de liaison (33) étant reliée au deuxième support (32).

7. Machine à laver à tambour (1) selon la revendication 6, le deuxième support (32) comprenant une tige de rotation (35) pour faire pivoter la porte (20), et l'unité de liaison (33) étant reliée à la tige de rotation (35).
